(19) Europäisches Patentamt
European Patent Office
Office européen des brevets

(11) EP 3 954 729 A1

(12) **EUROPEAN PATENT APPLICATION**
published in accordance with Art. 153(4) EPC

(43) Date of publication:
**16.02.2022 Bulletin 2022/07**

(21) Application number: **20788378.6**

(22) Date of filing: **06.04.2020**

(51) International Patent Classification (IPC):
***C08J 5/18*** *(2006.01)* ***B29C 45/14*** *(2006.01)*
***B32B 27/30*** *(2006.01)* ***B32B 27/36*** *(2006.01)*
***C08G 64/00*** *(2006.01)* ***C08J 7/04*** *(2020.01)*

(52) Cooperative Patent Classification (CPC):
**B29C 45/14; B32B 27/30; B32B 27/36; C08G 64/00; C08J 5/18; C08J 7/04**

(86) International application number:
**PCT/JP2020/015453**

(87) International publication number:
**WO 2020/209211 (15.10.2020 Gazette 2020/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.04.2019 JP 2019073300**

(71) Applicants:
- **MITSUBISHI GAS CHEMICAL COMPANY, INC.**
  **Chiyoda-ku**
  **Tokyo 100-8324 (JP)**
- **MGC Filsheet Co., Ltd.**
  **Tokorozawa-shi, Saitama 359-1164 (JP)**

(72) Inventor: **KANEKO Satoshi**
**Toyonaka-shi, Osaka 561-0823 (JP)**

(74) Representative: **Hoffmann Eitle**
**Patent- und Rechtsanwälte PartmbB**
**Arabellastraße 30**
**81925 München (DE)**

(54) **FILM, LAMINATE, THERMOFORMED BODY, IN-MOLD MOLDING, METHOD FOR PRODUCING MOLDING, AND METHOD FOR PRODUCING IN-MOLD MOLDING**

(57) Provided is a film including a polycarbonate resin capable of achieving excellent drawdown resistance during thermoforming and excellent formability in processing a bent portion and the like thereof. THe film contains a polycarbonate resin (a) which satisfies the following expression (i), when a viscosity at a shear rate of 6.080 × 10 [l/s] measured at 300°C is X [Pa·s] and a viscosity at a shear rate of 6.080 × $10^3$ [l/s] measured at 300°C is Y [Pa·s].

$$-0.69 < \frac{\log Y - \log X}{2} < -0.41 \quad \cdots (i)$$

EP 3 954 729 A1

Fig. 1

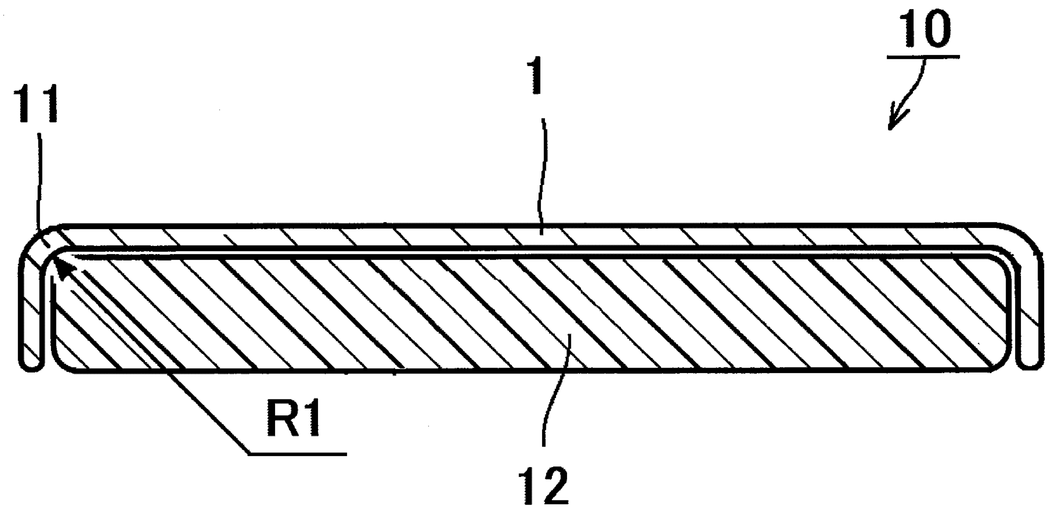

## Description

[Technical Field]

The present invention relates to a film, a multilayered article, a thermoformed article, an in-mold formed article, a method for producing a formed article, and a method for producing an in-mold formed article.

[Background Art]

Polycarbonate resin has not only excellent mechanical properties but also heat resistance, cold resistance, electrical properties, transparency, and the like, and is applied in various fields as an engineering plastic.

Patent Literature 1 discloses a method for producing a resin composition obtained by melt-kneading a resin mixture including an acrylic resin and a polycarbonate resin at a predetermined temperature and a predetermined shear rate, wherein a relative viscosity (ηB / ηA) of a melt viscosity (ηA) of the acrylic resin and a melt viscosity (ηB) of the polycarbonate resin at the temperature and shear rate at the time of the melt-kneading is within a predetermined range.

[Citation List]

[Patent Literature]

[Patent Literature 1] Japanese Patent Laid-Open No. 2012-051997

[Summary of Invention]

[Technical Problem]

Here, the polycarbonate resin is softened by heating, and is then processed into a desired shape. For example, if the edge of a heated polycarbonate resin film is held and compressed air blown onto it from above, a formed article is obtained in which the film follows the shape of the surface of the lower mold. Alternatively, the mold and the film are brought into close contact with each other by sucking the air on the mold side or by combining compressed air and suction. In such processing, the center of the film may significantly hang down at the heating stage before performing the processing by compressed air or suction. This is a so-called "drawdown" problem.

One way of dealing with this drawdown is to increase the glass transition point (Tg) of the polycarbonate resin. However, simply raising the glass transition point of the polycarbonate resin will in many cases reduce formability. For example, processing for forming a bent portion having a small radius of curvature may be difficult. This is because the radius of curvature of the bent portion deviates from the target value, or wrinkles, sink marks, voids, and the like form in a part of the film. Thus, for a polycarbonate resin film, obtaining excellent processability while suppressing drawdown run counter to each other, and it has been difficult to achieve.

An object of the present invention is to solve such a problem by providing a film including a polycarbonate resin capable of achieving excellent drawdown resistance when thermoforming the film and excellent formability in processing a bent portion and the like thereof. In addition, it is an object of the present invention to provide, using the above-described film, a multilayered article, a thermoformed article, an in-mold formed article, a method for producing a formed article, and a method for producing an in-mold formed article.

[Solution to Problem]

The above-described problem is solved by the following means.

<1> A film comprising a polycarbonate resin (a), wherein when the polycarbonate resin (a) has a viscosity of X [Pa·s] at a shear rate of $6.080 \times 10$ [1/s] measured at 300°C and a viscosity of Y [Pa·s] at a shear rate of $6.080 \times 10^3$ [l/s] measured at 300°C, the following expression (i) is satisfied.
[Expression 1]

$$-0.69 < \frac{\log Y - \log X}{2} < -0.41 \quad \cdots (i)$$

<2> The film according to <1>, wherein the polycarbonate resin has a viscosity average molecular weight of $1.0 \times 10^4$ to $5.0 \times 10^4$.

<3> The film according to <1> or <2>, wherein the polycarbonate resin (a) is a polycarbonate resin including 70 to 100 mol% of a constituent unit represented by formula (1) with respect to all the constituent units of the polycarbonate resin (a),

[Formula 1]

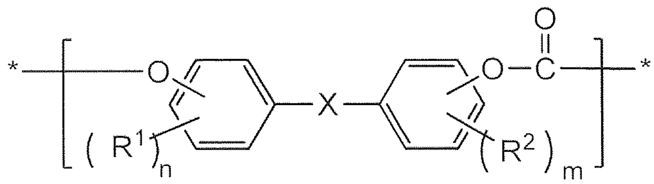

(1)

wherein $R^1$ and $R^2$ each independently represent an alkyl group or an aryl group; X represents a single bond or a group represented by any of the following formulas (2) to (4); n and m are each independently an integer from 0 to 4; and * represents a bond.

[Formula 2]

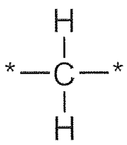

(2)

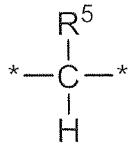

(3)

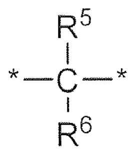

(4)

wherein $R^5$ and $R^6$ are each independently an alkyl group or an aryl group; and * is a bond.

<4> The film according to any one of <1> to <3>, wherein the polycarbonate resin (a) includes two or more types of polycarbonate resins having different viscosity average molecular weights.

<5> The film according to any one of <1> to <4>, wherein the polycarbonate resin (a) has a flow value (Q value) of 1.0 or more and 6.5 or less.

<6> The film according to any one of <1> to <5>, wherein the polycarbonate resin (a) has a branched structure represented by formula (A),

[Formula 3]

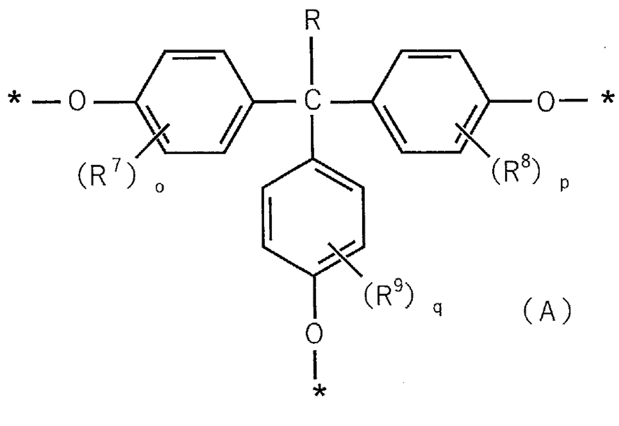

(A)

wherein R is hydrogen or an alkyl group having 1 to 5 carbon atoms; $R^7$, $R^8$, and $R^9$ each independently represent an alkyl group or an aryl group; o, p, and q are each independently an integer from 0 to 4; and * represents a bond.

<7> The film according to any one of <1> to <6>, wherein a total thickness is 0.1 to 3.0 mm.

<8> A multilayered article having a layer comprising a thermoplastic resin (b) on at least one surface of the film according to any one of <1> to <6>.

<9> The multilayered article according to <8>, wherein when the polycarbonate resin (a) has a viscosity of X [Pa·s] at a shear rate of $6.080 \times 10$ [1/s] measured at 300°C and a viscosity of $X^1$ [Pa·s] at a shear rate of $1.216 \times 10^2$ [l/s] measured at 300°C, and the thermoplastic resin (b) has a viscosity of $X^2$ at a shear rate of $6.080 \times 10$ [l/s] measured at 240°C and a viscosity of $X^3$ at a shear rate of $1.216 \times 10^2$ [l/s] measured at 240°C, the following expressions (X1) to (X6) are satisfied.

$X = C^a \times (6.080 \times 10$ (X1)
$X^1 = C^a \times (1.216 \times 10^2)^{na}$ (X2)
$X^3 = C^b \times (6.080 \times 10)^{nb}$ (X3)
$X^4 = C^b \times (1.216 \times 10^2)^{nb}$ (X4)
$0 < |C^a - C^b| < 3.2 \times 10^4$ (X5)
$0 < |na - nb| < 3.8 \times 10^{-1}$ (X6)

<10> The multilayered article according to <8> or <9>, wherein the thermoplastic resin (b) includes at least one resin selected from an acrylic resin, the polycarbonate resin (a), and a polycarbonate resin other than the polycarbonate resin (a).
<11> The multilayered article according to <8> or <9>, wherein the thermoplastic resin (b) includes an acrylic resin.
<12> The multilayered article according to any one of <8> to <11>, wherein a thickness of the layer containing the thermoplastic resin (b) is 10 to 100 μm.
<13> A multilayered article having a hard coat layer on at least one surface of the film according to any one of <1> to <7>.
<14> The multilayered article according to any one of <8> to <12>, further comprising a hard coat layer on at least one surface of the surface of the film containing the polycarbonate resin (a) or the surface of the layer containing the thermoplastic resin (b).
<15> The multilayered article according to any one of <8> to <12> and <14>, wherein the total thickness is 0.1 to 3.0 mm.
<16> The multilayered article according to any one of <8> to <12>, <14> and <15>, wherein the total thickness excluding the hard coat layer is 0.1 to 3.0 mm.
<17> The multilayered article according to any one of <8> to <12> and <14> to <16>, wherein a ratio (T1 : T2) of a thickness (T1) of the film containing the polycarbonate resin (a) to a thickness (T2) of the layer containing the thermoplastic resin (b) is 1 : 1 to 50 : 1.
<18> The multilayered article according to any one of <8> to <17>, comprising a print layer on at least one surface thereof.
<19> A thermoformed article comprising the film according to any one of <1> to <7> or the multilayered article according to any one of <8> to <18>.
<20> An in-mold formed article comprising the film according to any one of <1> to <7> or the multilayered article according to any one of <8> to <18>.
<21> A method for producing a formed article, which comprises thermoforming the film according to any one of <1> to <7> or the multilayered article according to any one of <8> to <18>.
<22> A method for producing an in-mold formed article, comprising:

(I)thermoforming the film according to any one of <1> to <7> or the multilayered article according to any one of <8> to <18>;
(II)inserting the thermoformed film or multilayered article into a mold for injection-molding; and
(III) lining a resin for injection-molding on the thermoformed film or multilayered article.

[Advantageous Effects of Invention]

It is now possible to provide a film including a polycarbonate resin capable of achieving excellent drawdown resistance during thermoforming and excellent formability in processing a bent portion and the like thereof. In addition, it is possible to provide a multilayered article, a thermoformed article, an in-mold formed article, a method for producing a formed article, and a method for producing an in-mold formed article using the above-described film.

[Brief Description of Drawings]

[Figure 1] Figure 1 is a cross-sectional view schematically illustrating an in-mold formed article produced from a film

according to an embodiment of the present invention.

[Figure 2] Figure 2 is a cross-sectional view schematically illustrating a multilayered article produced from a film according to an embodiment of the present invention.

[Figure 3] Figure 3 is a cross-sectional view schematically illustrating a modified example of a thermoformed article produced from a film according to an embodiment of the present invention.

[Figure 4] Figure 4 is a cross-sectional view schematically illustrating an example of a thermoforming step according to an embodiment of the present invention.

[Figure 5] Figure 5 is a cross-sectional view schematically illustrating a formed article according to an Example.

[Description of Embodiments]

In the present specification, the numerical ranges described using the word "to" include the numerical values before and after "to" as a lower limit value and an upper limit value, respectively.

In the present specification, "ppm" means "ppm by mass".

The film of the present invention (film containing a polycarbonate resin (a)) is characterized in that when the polycarbonate resin (a) has a viscosity of X [Pa·s] at a shear rate of 6.080 × 10 [1/s] measured at 300°C and a viscosity of Y [Pa·s] at a shear rate of $6.080 \times 10^3$ [l/s] measured at 300°C, the following expression (i) is satisfied.

[Expression 2]

$$-0.69 < \frac{\log Y - \log X}{2} < -0.41 \quad \cdots (i)$$

As a result, drawdown resistance can be improved and good formability can be maintained. Hereinafter, the present invention will be described in detail with reference to the drawings as appropriate while focusing on the preferred embodiments of the present invention.

<Expression (i) regarding viscosity>

The film containing the polycarbonate resin (a) satisfies the following expression (i).

[Expression 3]

$$-0.69 < \frac{\log Y - \log X}{2} < -0.41 \quad \cdots (i)$$

In the expression, X is the viscosity [Pa·s] at a shear rate of 6.080 × 10 [l/s] when measured at 300°C, and Y is the viscosity [Pa·s] at a shear rate of $6.080 \times 10^3$ [l/s] when measured at 300°C. In the present specification, unless stated otherwise, a value measured based on the method described in the Examples described later is adopted as the viscosity.

In order to solve the above-described problem, the present inventor focused on various physical property values of polycarbonate resin, and discovered that when the expression (log Y - log X) / 2 (this expression is referred to as "expression (ia)") obtained from the viscosity exceeds -0.69 and is less than -0.41, it is possible to achieve both an improvement in drawdown and maintenance of formability, which are usually properties that run counter to each other.

Above-described expression (ia) corresponds to the slope when a graph is plotted with the shear rate on the horizontal axis and the common logarithm of viscosity on the vertical axis. If this slope is too large or too small, the effects of the present invention cannot be achieved. It is presumed that by setting above-described expression (ia) to less than -0.41, good thermoformability is realized while preventing drawdown. On the other hand, it is presumed that by setting above-described expression (ia) to more than -0.69, it is possible to prevent the film from flowing too much or becoming too hard.

Expression (ia) exceeds -0.69, but is preferably -0.65 or more, more preferably -0.60 or more, and even more preferably -0.58 or more. The upper limit value is less than -0.41, but is preferably -0.43 or less, more preferably -0.45 or less, and further preferably -0.47 or less.

The amount of drawdown (see d in Figure 4) produced in the thermoforming step of the film containing the polycarbonate resin (a) will now be described here. This amount is preferably small, and the drawdown amount d is preferably less than 30 mm, more preferably 25 mm or less, further preferably 23 mm or less, and even further preferably

less than 10 mm. The lower limit value is not particularly limited, but is, for example, 0 mm or more. In particular, it is preferable to satisfy the above-described drawdown amount when the thickness of the film containing the polycarbonate resin (a) described later is within the range of 0.1 to 3.0 mm. Further, for example, it is preferable to satisfy the above-described drawdown amount when the size of the film is measured for A4 size (210 × 297 mm).

The drawdown amount is measured in accordance with the method described in the Examples described later.

<Polycarbonate resin (a)>

As the polycarbonate resin (a), an aromatic polycarbonate resin having an aromatic ring (for example, a benzene ring, a naphthalene ring, an anthracene ring, a phenanthrene ring, a biphenyl ring, and the like) in the main chain is preferable, and a polycarbonate resin including a constituent unit represented by the following formula (1) is more preferable. By using a polycarbonate resin that includes a constituent unit represented by the following formula (1), a film having excellent heat resistance, transparency, and tenacity can be obtained.

[Formula 4]

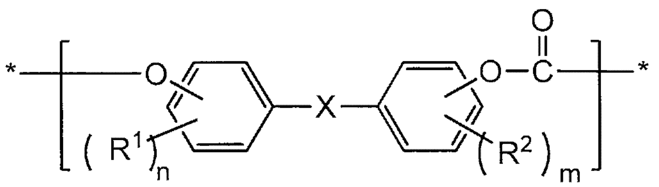
(1)

In the formula, $R^1$ and $R^2$ each independently represent an alkyl group or an aryl group; X represents a single bond or a group represented by any of the following formulas (2) to (4); n and m are each independently an integer from 0 to 4; and * represents a bond.

[Formula 5]

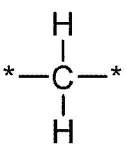
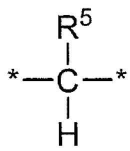
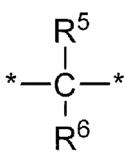

(2) (3) (4)

In the formulas, $R^5$ and $R^6$ are each independently an alkyl group or an aryl group; and * is a bond.

In the formulas, $R^1$, $R^2$, $R^5$, and $R^6$ are preferably each independently an alkyl group having 1 to 10 carbon atoms or an aryl group having 6 to 30 carbon atoms. The alkyl group is more preferably an alkyl group having 1 to 6 carbon atoms, and particularly preferably an alkyl group having 1 to 4 carbon atoms. Examples thereof include a methyl group, an ethyl group, an n-propyl group, an isopropyl group, an n-butyl group, an isobutyl group, a t-butyl group, and the like. The aryl group is more preferably an aryl group having 6 to 18 carbon atoms, and particularly preferably an aryl group having 6 to 12 carbon atoms. Examples thereof include a phenyl group, a naphthyl group, a biphenyl group, and the like. These alkyl and aryl groups may further have a substituent.

In the above formula, n and m are each independently an integer from 0 to 4, but are preferably an integer from 0 to 2, more preferably 0 or 1, and further preferably 0.

Specific examples of the monomer forming the constituent unit represented by formula (1) include 4,4'-biphenol, 2,4'-biphenol, 2,2'-biphenol, 3,3'-dimethyl-4,4'-biphenol, 3,3'-diphenyl-4,4'-biphenol, bis(p-hydroxyphenyl)methane, 1,1'-bis(4-hydroxyphenyl)ethane, 2,2'-bis(4-hydroxyphenyl)propane, 1,1'-bis(4-hydroxyphenyl)-1-phenylethane, 1,1'-bis(4-hydroxy-3-methylphenyl)-1-phenylethane, 1,1'-bis(4-hydroxy-3-phenylphenyl)-1-phenylethane, bis(4-hydroxyphenyl)diphenylmethane, bis(4-hydroxy-3-methylphenyl)diphenylmethane, bis(4-hydroxy-3-phenylphenyl)diphenylmethane, bis(4-hydroxyphenyl)phenylmethane, bis(4-hydroxyphenyl)diphenylmethane, bis(4-hydroxy-3-methylphenyl)diphenylmethane, bis(4-hydroxy-3-phenylphenyl)diphenylmethane, 1,1'-bis(4-hydroxyphenyl)-1-phenylethane-bis(4-hydroxyphenyl)-1-naphthylethane, and the like.

The constituent unit represented by formula (1) is preferably at least one selected from a constituent unit derived from 2,2'-bis(4-hydroxyphenyl)propane (constituent unit represented by the following formula (3)), a constituent unit derived from 1,1'-bis(4-hydroxyphenyl)-1-phenylethane (constituent unit represented by the following formula (4)), and

a constituent unit derived from bis(4-hydroxyphenyl)diphenylmethane (constituent unit represented by the following formula (5)).

[Formula 6]

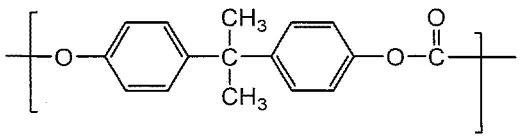

(3)

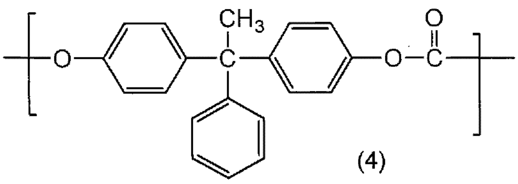

(4)

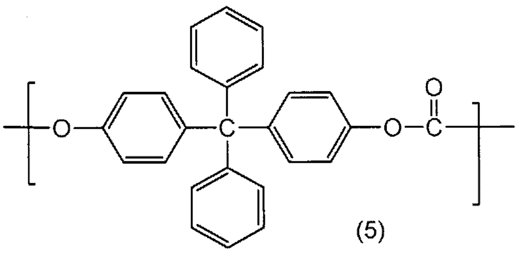

(5)

The polycarbonate resin (a) may include any constituent unit other than the constituent unit represented by formula (1), but the polycarbonate resin (a) is preferably composed of only the constituent unit represented by formula (1). The ratio of the constituent unit represented by formula (1) is preferably 70 to 100 mol%, more preferably 80 to 100 mol%, further preferably 90 to 100 mol%, and particularly preferably 95 to 100 mol%, based on all of the constituent units of the polycarbonate resin (a). The polycarbonate resin (a) may include one or more constituent units represented by formula (1). When two or more types are included, the total amount is preferably within the above-described range. Polycarbonate resin has the advantage of having excellent heat resistance and strength (tenacity) while maintaining transparency. In the present invention, from the viewpoint of fully exhibiting this advantage, as described above, it is preferable that the ratio of the constituent unit of the polycarbonate structure is higher.

The other constituent units may be any constituent unit that can be included in a conventional polycarbonate resin.

The polycarbonate resin (a) has a viscosity average molecular weight of preferably $1.0 \times 10^4$ or more, more preferably $1.5 \times 10^4$ or more, and further preferably $2.0 \times 10^4$ or more. The upper limit value is preferably $10.0 \times 10^4$ or less, more preferably $5.0 \times 10^4$ or less, further preferably $4.0 \times 10^4$ or less, and even further preferably may be $3.0 \times 10^4$ or less. By setting the viscosity average molecular weight to be equal to or more than the lower limit value, a film having excellent tenacity can be obtained. Further, by setting the viscosity average molecular weight to be equal to or less than the upper limit value, a composition exhibiting a melt viscosity suitable for melt kneading or film molding can be obtained.

In the present invention, it is preferable to include two or more types (preferably 2 to 4 types) of polycarbonate resins having different viscosity average molecular weights. By such a constitution, the value of the above-described expression (ia) tends to increase, and the thermoformability tends to be further improved. The difference in viscosity average molecular weights between the polycarbonate resin having the highest molecular weight and the polycarbonate resin having the lowest molecular weight constituting the polycarbonate resin (a) is preferably 20,000 or more, more preferably 30,000 or more, and further preferably 40,000. The upper limit value is not particularly defined, but for example, it is preferably 90,000 or less, and preferably 80,000 or less. By setting it to be equal to or more than the above-described lower limit value, formability tends to be further improved while lowering the drawdown amount, and by setting it to be equal to or less than the above-described upper limit value, the melt viscosity properties suitable for melt kneading or film molding tend to be further improved.

In the present specification, unless stated otherwise, a value measured based on the method described in the Examples described later is adopted as the average molecular weight.

In the present invention, the polycarbonate resin (a) has a flow value (Q value) of preferably 1.0 or more, more preferably 1.3 or more, and further preferably 1.5 or more. The upper limit value is, for example, 6.5 or less, preferably 5.0 or less, more preferably 4.0 or less, and further preferably 3.0 or less. By setting the Q value of the polycarbonate resin (a) to be equal to or less than the above-described upper limit value, the drawdown amount can be effectively reduced. Further, by setting the Q value to be equal to or more than the above-described lower limit value, the fluidity tends to increase and the formability tends to be improved.

In the polycarbonate resin used in the present invention, the substrate (monomer) of the resin and the synthesis conditions can be adjusted while changing as appropriate in order to bring the value of expression (ia) into the range between the above-described upper limit value and the lower limit value. As an example, the ratio of resin branching can be adjusted. Specifically, the value of expression (ia) tends to increase as the ratio of the branched portions increases. The ratio of resin branching can be expressed, for example, by the number of moles of the branching agent (M2) with respect to the total number of moles of the raw material monomer (M1) used during synthesis and the number of moles of the branching agent (M2). In the present invention, this ratio (M2 / (M1 + M2)) is preferably 0.05 mol% or more, more preferably 0.1 mol% or more, and further preferably 0.2 mol% or more. The upper limit value is preferably 1.0 mol% or less, more preferably 0.8 mol% or less, and further preferably 0.6 mol% or less.

Examples of the structure of the branched portion included in the polycarbonate resin include a structure represented by the following formula (A). By using the branched structure represented by formula (A), the mechanical properties and optical properties the polycarbonate resin originally has are less likely to be harmed. In the formula, * represents a bond position. Examples of preferable branching agents include 1,1,1-tris(4-hydroxyphenyl)ethane, fluoroglucin, 2,6-dimethyl-2,4,6-tri(4-hydroxyphenyl)heptene-3,4,6-dimethyl-2,4,6-tri(4-hydroxyphenyl)heptene-2,1,3,5-tri(2-hydroxyphenyl)benzol, and the like.

[Formula 7]

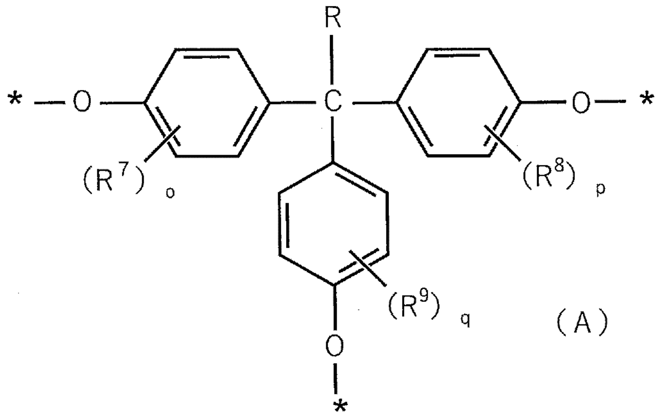

(A)

In formula (A), R is hydrogen or an alkyl group having 1 to 5 carbon atoms; $R^7$, $R^8$, and $R^9$ each independently represent an alkyl group or an aryl group; o, p, and q are each independently an integer from 0 to 4; and * represents a bond.

R is preferably a hydrogen atom, a methyl group, or an ethyl group, and more preferably a methyl group. It is preferable that $R^7$, $R^8$, and $R^9$ are each independently an alkyl group having 1 to 5 carbon atoms or a phenyl group. It is preferable that o, p, and q are each independently 0 or 1, and more preferably 0.

The structure represented by formula (A) is preferably a structure represented by the following formula.

[Formula 8]

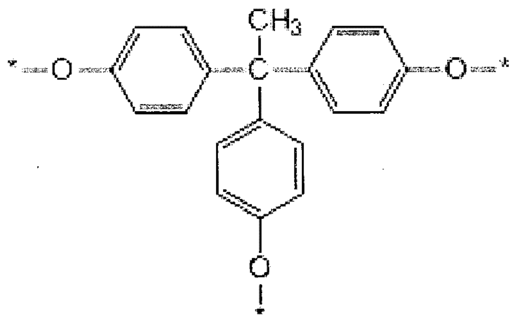

The polycarbonate resin (a) can be produced by reacting a monomer that induces the constituent unit represented by formula (1), and optionally a monomer that induces another constituent unit, with a carbonate ester-forming compound. Specifically, the polycarbonate resin (a) can be produced by a known method used in producing polycarbonate resins, for example, a direct reaction between a bisphenol and phosgene (phosgene method), a transesterification reaction between a bisphenol and bisaryl carbonate (transesterification method), and the like. Alternatively, a commercially available reagent may be used.

Examples of the carbonate ester-forming compound include phosgene and bisaryl carbonates such as diphenyl carbonate, di-p-tolyl carbonate, phenyl-p-tolyl carbonate, di-p-chlorophenyl carbonate, and dinaphthyl carbonate. Only one of these compounds may be used, or two or more of these compounds may be used in combination.

In the phosgene method, usually, a monomer that induces the constituent unit represented by formula (1) and optionally a monomer that induces another constituent unit are reacted with phosgene in the presence of an acid binder and a solvent. As the acid binder, for example, pyridine, a hydroxide of an alkali metal such as sodium hydroxide or potassium hydroxide, or the like is used, and as the solvent, for example, methylene chloride, chloroform, or the like is used. Furthermore, in order to promote the polycondensation reaction, a catalyst such as a tertiary amine like triethylamine or a quaternary ammonium salt is added. In addition, in order to adjust the degree of polymerization, it is preferable to add a monofunctional group compound, such as phenol, p-t-butylphenol, p-cumylphenol, or a long-chain alkyl-substituted phenol. Further, if desired, a small amount of an antioxidant, such as sodium sulfite or hydrosulfite, or a branching agent such as fluoroglucin or isatin bisphenol, may be added. The reaction temperature is usually in the range of 0 to 150°C, and preferably in the range of 5 to 40°C. The reaction time depends on the reaction temperature, but is usually 0.5 minutes to 10 hours, and preferably 1 minute to 2 hours. Further, during the reaction, it is preferable to hold the pH of the reaction system at 10 or more.

On the other hand, in the transesterification method, a monomer that induces the constituent unit represented by formula (1) and optionally a monomer that induces another constituent unit are mixed with bisaryl carbonate and reacted at high temperature under reduced pressure. The reaction is usually carried out at a temperature in the range of 150 to 350°C, and preferably 200 to 300°C. The pressure is finally reduced to preferably 133 Pa or less, and phenols derived from the bisaryl carbonate produced by the transesterification reaction are removed from the system by distillation. The reaction time depends on the reaction temperature, the degree of pressure reduction, and the like, but is usually about 1 to 24 hours. The reaction is preferably carried out in an atmosphere of an inert gas such as nitrogen or argon. Further, if desired, a molecular weight modifier, an antioxidant, a branching agent, and the like may be added.

The polycarbonate resin (a) preferably includes a polycarbonate obtained by the phosgene method. The content of the polycarbonate obtained by the phosgene method is preferably 80% by mass or more, more preferably 90% by mass or more, and further preferably 99% by mass or more, of the polycarbonate resin (a). By setting the content of the polycarbonate obtained by the phosgene method in the polycarbonate resin (a) to be in the above range, a film having excellent drawdown resistance and excellent hue and hydrolysis resistance tends to be obtained.

The film of the present invention contains the polycarbonate resin (a), and may further contain another thermoplastic resin within a range that does not depart from the gist of the present invention. The film containing the polycarbonate resin (a) is composed of preferably 90% by mass or more, more preferably 95% by mass or more, and further preferably 99% by mass or more, of polycarbonate resin.

As the polycarbonate resin (a), one type or a plurality of types may be used. When a plurality of types of resins are used, the total amount is within the above range.

<Other components>

The film containing the polycarbonate resin (a) may include components other than the polycarbonate resin (a).

Examples of components other than the polycarbonate resin (a) include a thermoplastic resin (for example, an acrylic resin) other than the polycarbonate resin (a), an ultraviolet absorbent, an antioxidant, an antistatic agent, a mold release agent, a lubricant, a dye, a pigment, a plasticizer, a flame retardant, a resin modifier, a compatibilizer, a reinforcing material such as an organic filler and an inorganic filler, and the like.

An example of the thermoplastic resin other than the polycarbonate resin (a) is an acrylic resin, and an acrylic resin described later in relation to the thermoplastic resin (b) is preferable.

For details of the ultraviolet absorbent, refer to the description in paragraph 0071 of Japanese Patent Laid-Open No. 2018-103518 and the description in paragraphs 0049 to 0055 of Japanese Patent Laid-Open No. 2017-031313, the contents of which are hereby incorporated in the present specification.

For details of the antioxidant, refer to the description in paragraphs 0057 to 0061 of Japanese Patent Laid-Open No. 2017-031313, the content of which is hereby incorporated in the present specification.

For details of the mold release agent, refer to the description in paragraphs 0035 to 0039 of WO 2015/190162, the content of which is hereby incorporated in the present specification.

<Properties of film containing polycarbonate resin (a)>

The thickness of the film containing the polycarbonate resin (a) is not particularly limited, but is preferably 0.1 mm or more, more preferably 0.15 mm or more, and further preferably 0.2 mm or more. The upper limit is preferably 3.0 mm or less, more preferably 2.0 mm or less, and further preferably 1.0 mm or less. It is preferable to set the thickness

to be equal to or less than the above-described upper limit value from the viewpoint that the improvement in drawdown during thermoprocessing is remarkable. The lower limit value is not particularly limited, but in practice it is equal to or more than the lower limit value described above.

The film in the present invention is a term that includes sheet-like and plate-like films.

The shape and size of the film containing the polycarbonate resin (a) are not particularly limited, but, for example, may be a quadrangular shape. From the viewpoint that the effect of the present invention is remarkable, each side is preferably 600 to 2600 mm, and is more preferably 1600 to 2000 mm or less. Another example is A4 size.

The film containing the polycarbonate resin (a) of the present invention can exhibit excellent thermal formability while suppressing drawdown and showing no deterioration in processability. As a specific example of the thermoforming processing, for example, there may be mentioned processing of the bent portion 11 of the film formed article illustrated in Figure 1. In order to form such a bent portion in close contact with the mold, it is advantageous for the film to be sufficiently thermally softened. However, thermal softening is disadvantageous in suppressing drawdown. To deal with these contradictory performance items, the present invention defines the dynamic viscosity of the film as in expression (i), and it is presumed that by satisfying this expression, good formability and drawdown resistance due to sufficient thermal softening can both be achieved.

When the film of the present embodiment is formed using a mold having a right-angled edge with a radius of curvature of less than 1 mm, the radius of curvature R1 of the bent portion 11 of the formed article can be 2.50 mm or less, can further be 2.2 mm or less, can still further be 2.0 mm or less, and can particularly be 1.60 mm or less. The lower limit value is not particularly limited, but in practice it is 0.01 mm or more. When a film containing the polycarbonate resin (a) is used, even for such a sharply bent portion, a good formed article in which sink marks, voids, wrinkles, and the like are suppressed can be obtained.

<Multilayered article / formed article>

The film containing the polycarbonate resin (a) of the present invention may be used as a single-layer film, may be a multilayered article combined with another film or the like, or may be another formed article.

In one embodiment of the multilayered article of the present invention, the multilayered article has a layer containing a thermoplastic resin (b) on at least one surface of the film containing the polycarbonate resin (a). The layer containing the thermoplastic resin (b) may have a film-like shape, a plate-like shape, a curved shape, an uneven shape, or the like.

The thermoplastic resin (b) preferably includes at least one resin selected from an acrylic resin, the polycarbonate resin (a), and a polycarbonate resin other than the polycarbonate resin (a), and an acrylic resin is more preferable. That is, the polycarbonate resin as the thermoplastic resin (b) may be a polycarbonate resin described above in the section <Polycarbonate resin (a)> or a different polycarbonate resin. When the polycarbonate resin (a) described above is used, the preferred range thereof is also the same.

As the acrylic resin used as the thermoplastic resin (b), a polymer of a (meth)acrylic compound monomer can be used. Examples of the (meth)acrylic compound monomer include acrylonitrile, methacrylonitrile, acrylic acid, methacrylic acid, and (meth)acrylic acid ester. Examples of the (meth)acrylic acid ester include methyl acrylate, ethyl acrylate, n-butyl acrylate, 2-ethylhexyl acrylate, methyl methacrylate, ethyl methacrylate, n-butyl methacrylate, 2-ethylhexyl methacrylate, and the like. Among them, methyl methacrylate (MMA) is preferable. Two or more types of these (meth)acrylic compound monomers may be mixed together.

For the acrylic resin, refer to the description in paragraph 0049 of Japanese Patent Laid-Open No. 2018-103518 and the description in paragraphs 0038 to 0048 of WO 2015/159813, which are hereby incorporated in the present specification.

The acrylic resin has a viscosity average molecular weight of preferably 50,000 or more, more preferably 75,000 or more, and further preferably 100,000 or more. The upper limit value is preferably 1,000,000 or less, more preferably 500,000 or less, and further preferably 250,000 or less.

In the present specification, unless stated otherwise, a value measured based on the method described in the Examples described later is adopted as the average molecular weight.

The layer containing the thermoplastic resin (b) is composed of 90% by mass or more, more preferably 95% by mass or more, and further preferably 99% by mass or more, of the thermoplastic resin (b). As the thermoplastic resin (b), one type may be used or two or more types may be used. When two or more types are used, the total amount is within the above range. When two or more types of polymers are used to form a polymer alloy, the method described above in the section regarding the polycarbonate resin can be appropriately used.

Further, other additives may be used together with the thermoplastic resin (b). Examples of the additives include the same additives as the other components which may be contained in the film containing the polycarbonate resin (a).

A more preferable embodiment of the multilayered article of the present invention is a multilayered article having a layer that contains the thermoplastic resin (b) on at least one surface of the film containing the polycarbonate resin

(a) (preferably at least one of the main surfaces of the film containing the polycarbonate resin (a)), wherein when the polycarbonate resin (a) has a viscosity of X [Pa·s] at a shear rate of $6.080 \times 10$ [1/s] measured at 300°C and a viscosity of $X^1$ [Pa·s] at a shear rate of $1.216 \times 10^2$ [1/s] measured at 300°C, and the thermoplastic resin (b) has a viscosity of $X^2$ at a shear rate of $6.080 \times 10$ [1/s] measured at 240°C and a viscosity of $X^3$ at a shear rate of $1.216 \times 10^2$ [1/s] measured at 240°C, the following expressions (X1) to (X6) are satisfied.

$X = C^a \times (6.080 \times 10)^{na}$ (X1)
$X^1 = C^a \times (1.216 \times 10^2)^{na}$ (X2)
$X^3 = C^b \times (6.080 \times 10)^{nb}$ (X3)
$X^4 = C^b \times (1.216 \times 10^2)^{nb}$ (X4)
$0 < |C^a - C^b| < 3.2 \times 10^4$ (X5)
$0 < |na - nb| < 3.8 \times 10^{-1}$ (X6)

By such a lineup, the thickness of the layer containing the thermoplastic resin (b) can be made more uniform. The reasons for satisfying these expressions are presumed to be as follows. That is, $C^a$ in the expression indicates the relationship between the viscosities of the polycarbonate resin (a) at each shear rate, and is a value corresponding to the viscosity when the shear rate of the graph with the viscosity on the vertical axis and the shear rate on the horizontal axis is 1.0 [1/s], and $C^b$ in the expression indicates the relationship between the viscosities of the thermoplastic resin (b) at each shear rate, and is a value corresponding to the viscosity when the shear rate of the graph with the viscosity on the vertical axis and the shear rate on the horizontal axis is 1.0 [1/s]. By reducing the difference between these values to $3.2 \times 10^4$ or less, it is presumed that the difference in viscosity between the polycarbonate resin (a) and the thermoplastic resin (b) during coextrusion is reduced. On the other hand, $n^a$ in the expression indicates the relationship between the viscosities of the polycarbonate resin (a) at each shear rate, and is a value corresponding to the slope of the graph with the viscosity on the vertical axis and the shear rate on the horizontal axis, and $n^b$ in the expression indicates the relationship between the viscosities of the thermoplastic resin (b) at each shear rate, and is a value corresponding to the slope of the graph with the viscosity on the vertical axis and the shear rate on the horizontal axis. By reducing the difference between these values to $3.8 \times 10^{-1}$, it is presumed that the difference in the slope between the polycarbonate resin (a) and the thermoplastic resin (b) is reduced. That is, it is presumed that the degree of change in viscosity due to the difference in shear rate becomes close between the polycarbonate resin (a) and the thermoplastic resin (b), and as a result, the thickness distribution is improved.

When improving the thickness distribution, it is preferable that production is carried out by co-extruding the polycarbonate resin (a) and the thermoplastic resin (b). By doing so, the effect of satisfying the above expressions (X1) to (X6) is more effectively achieved.

Expression (X5) is preferably $0 < |C^a - C^b| < 2.8 \times 10^4$, more preferably $0 < |C^a - C^b| < 5.8 \times 10^3$, and further preferably $0 < |C^a - C^b| < 2.8 \times 10^3$.

Expression (X6) is preferably $0 < |na - nb| < 3.5 \times 10^{-1}$, more preferably $0 < |na - nb| < 3.0 \times 10^{-1}$, and further preferably $0 < |na - nb| < 2.5 \times 10^{-1}$.

In the present invention, the polycarbonate resin (a) has a $C^a$ of preferably $2.5 \times 10^3$ or more, and more preferably $3.0 \times 10^3$ or more. Further, the polycarbonate resin (a) has a $C^a$ of preferably $1.0 \times 10^5$ or less, more preferably $5.0 \times 10^4$ or less, and further preferably $3.0 \times 10^4$ or less. Moreover, the polycarbonate resin (a) has an na of preferably $-5.5 \times 10^{-1}$ or more, and preferably $-5.0 \times 10^{-2}$ or less, more preferably $-1.0 \times 10^{-1}$ or less, and further preferably $-2.5 \times 10^{-1}$ or less.

In the present invention, the thermoplastic resin (b) has a $C^b$ of preferably $1.0 \times 10^3$ or more, and more preferably $5.0 \times 10^3$ or more. Further, the thermoplastic resin (b) has a $C^b$ of preferably $1.0 \times 10^5$ or less, more preferably $6.0 \times 10^4$ or less, and further preferably $4.0 \times 10^4$ or less. Moreover, the thermoplastic resin (b) has an nb of preferably $-7.0 \times 10^{-1}$ or more, and preferably $-5.0 \times 10^{-2}$ or less, more preferably $-1.0 \times 10^{-1}$ or less, and further preferably $-3.0 \times 10^{-1}$ or less.

When two or more types of polycarbonate resin (a) and / or thermoplastic resin (b) are included, the values of $C^a$, $C^b$, na, and nb of the mixture are adopted.

Figure 1 is a cross-sectional view schematically illustrating an in-mold formed article according to a preferred embodiment of the present invention. An in-mold formed article 10 of the present embodiment has a structure in which a layer 12 composed of a lining resin is arranged in a recess of a thermoformed article of a film 1 containing the polycarbonate resin (a). The thermoformed article of the film 1 containing the polycarbonate resin (a) can be suitably produced by a thermoforming step using an infrared heater and a mold. The layer 12 composed of a lining resin can be suitably produced by injection-molding using insert molding. The layer composed of the lining resin may include the polycarbonate resin (a) or may be the above-described thermoplastic resin (b). Further, other components may be included. Examples of the other components include the other components that may be included in the above-described polycarbonate resin film (a).

Figure 2 is a cross-sectional view schematically illustrating a multilayered article produced from the film according to an embodiment of the present invention. In the present embodiment, a film 1a containing the polycarbonate resin (a) is as illustrated in the same figure, and may or may not be thermoformed. In the present embodiment, a multilayered article 20 is configured such that a layer 2 containing the thermoplastic resin (b) is provided on the film 1a containing the polycarbonate resin (a).

Figure 3 is a cross-sectional view schematically illustrating a thermoformed article according to another embodiment of the present invention. In the thermoformed article 30 illustrated in the same figure, as the layer containing the thermoplastic resin (b), a concave-shaped layer 2a containing the thermoplastic resin (b) is formed on the outside of the concave portion of the formed article of the film 1 containing the polycarbonate resin (a).

A thickness T2 of the layer containing the thermoplastic resin (b) depends on the application, but from the viewpoint of the effect of the present invention, it is preferably 10 μm or more, more preferably 20 μm or more (0.02 mm or more), and further preferably 40 μm or more (0.04 mm or more). The upper limit value is preferably 200 μm or less (0.2 mm or less), and more preferably 100 μm or less (0.1 mm or less).

The overall thickness (T1 + T2) of the multilayered article is preferably 0.1 mm or more, more preferably 0.3 mm or more, and further preferably 0.5 mm or more. The upper limit value is preferably 3.0 mm or less, more preferably 2.5 mm or less, and further preferably 2.0 mm or less. The multilayered article is not limited to the two-layer structure illustrated in the drawings, and may be a multilayered article structure having three or more layers as appropriate. In that case, it is preferable that the thickness of the entire multilayered article is the thickness specified above.

A ratio (T1:T2) of the thickness (T1) of the film containing the polycarbonate resin (a) to the thickness (T2) of the layer containing the thermoplastic resin (b) is, from the viewpoint of achieving both impact resistance and surface hardness, preferably 1:1 to 50:1, more preferably 1:1 to 30:1, and further preferably 1:1 to 20:1. The thickness of the film containing the polycarbonate resin (a), the thickness of the layer containing the thermoplastic resin (b), and the ratio between the two have been described with reference to the drawings as appropriate for convenience of understanding, but those properties should not construed as being limited to in-mold formed articles and multilayered articles.

The multilayered article or formed article (thermoformed article, in-mold formed article) of the present invention may further have a hard coat layer.

That is, an example of an embodiment of the multilayered article of the present invention is a multilayered article having a hard coat layer on at least one surface of the film containing the polycarbonate resin (a). Another example is a multilayered article having a hard coat layer on at least one surface of a surface of the film containing a polycarbonate resin (a) or a surface of the layer containing the thermoplastic resin (b).

Further, the in-mold formed article of the present invention may have a hard coat layer.

For the hard coat layer, refer to paragraphs 0073 to 0076 of Japanese Patent Laid-Open No. 2018-103518, the description of which is hereby incorporated in the present specification.

When the formed article or the multilayered article of the present invention has a hard coat layer, it is preferable that the thickness of the portion excluding the hard coat layer is the thickness specified as the thickness of the entire formed article or multilayered article described above.

The multilayered article or formed article of the present invention may further have a print layer. In the example of the formed article illustrated in Figure 1, the print layer may be provided on an inner surface of the film formed article 1 (the surface on the layer 12 side composed of the lining resin) or on an outer surface of the formed article 1 (surface on the opposite side of the layer 12 composed of the lining resin) . For the print layer, refer to the modes described in paragraph 0085 of Japanese Patent Laid-Open No. 2018-103518, paragraph 0071 of Japanese Patent Laid-Open No. 2015-104910, and paragraphs 0033 to 0040 of Japanese Patent Laid-Open No. 2011-219667, the descriptions of which are hereby incorporated in the present specification.

<Production method>

Next, a preferred embodiment of a method for producing a multilayered article and a formed article using the film containing the polycarbonate resin (a) will be described.

The film containing the polycarbonate resin (a) can be produced by appropriately using a conventionally known technique. For example, the film can be obtained as an extruded article by using a T-shaped die. For example, at this time, the multilayered article may be obtained by co-extruding with the thermoplastic resin (b). In the production method according to a preferred embodiment of the present invention, there is a step (I) of thermoforming a film or a multilayered article. In the present invention, it is preferable that in-mold forming is carried out in which, after the step (I) of thermoforming the film or the like containing the above-described polycarbonate resin (a), there is a step (II) of inserting the thermoformed film or the like into a mold for injection-molding, and a step (III) of lining a resin for injection-molding on the thermoformed film or the like containing the polycarbonate resin (a).

In the thermoforming step (I), the film or the like containing the polycarbonate resin (a) is heated, but the method is not particularly limited and a known method can be used. For example, the film or the like may be heated by an infrared

heater and processed. In the thermoforming step, a known method can be appropriately applied as a method of imparting a shape to the film. For example, a mold having a predetermined shape can be used. The method of bringing the film and the mold into close contact with each other may also be selected as appropriate. For example, a mode of pressing with the above-described mold, a method of applying compressed air on the film or the like (compressed-air forming), a method of suction-attaching the film from a suction hole of the mold (vacuum forming), a method of combining these, and the like can be used. Alternatively, those methods may be combined.

Figure 4 is a cross-sectional view schematically illustrating an example of the above-described thermoforming step (I). In the present embodiment, the four sides of the film 1 containing the polycarbonate resin (a) are gripped by a gripping tool 4. In this step, an infrared heater 3 is arranged above the film 1 containing the polycarbonate resin (a), and the film 1 containing the polycarbonate resin (a) is heated and softened by the heater.

The problem of drawdown is likely to arise in this heating softening step. The alternate long and short dash line in Figure 4 schematically illustrates the form of a film 1x containing the polycarbonate resin (a) when drawdown has occurred. In this example, the drawdown amount is indicated by the reference symbol d.

In the thermoforming step of the production method of the present embodiment, the film or the like formed by the above-described mold may be further trimmed by press forming. Therefore, unless stated otherwise, the meaning of the terms film formed article or thermoformed article includes products or semi-finished products that have been trimmed.

In the present embodiment, the thermoformed film or the like is then inserted and arranged in the mold (film insert step (II)). It is preferable that the inner surface of the mold used for the insert match the outer shape (contour) of the film or the like containing the thermoformed polycarbonate resin (a). In such a case, the thermoformed film or the like can be placed in the mold in a state where the film or the like is accurately positioned without any deviation.

The production method of one embodiment of the present invention further has a step (III) of lining a resin for injection-molding on the formed article of the film thermoformedabove. This lining processing is not particularly limited, and a known injection-molding method can be appropriately applied. Through such a step, by further performing finishing processing of burrs and the like, an in-mold formed article in which a film formed article and a layer composed of a lining resin as illustrated in Figure 1 are integrated can be obtained.

However, the present invention should not be narrowly construed by the above description and drawings. For example, in a preferred embodiment of the present invention, the polycarbonate resin (a) and the thermoplastic resin (b) may be co-extruded. In another example, a film containing the polycarbonate resin (a) may be prepared, a film containing the polycarbonate resin (b) may be separately prepared, and both of the films may be laminated to form a multilayered article. In this case, a processing form may be imparted to the film containing the polycarbonate resin (a) by thermoforming it in advance. By compressing a film containing the polycarbonate resin (b) on the above film for lamination, a multilayered article can be obtained that has a predetermined form similar to an in-mold formed article.

<Uses>

The film containing the polycarbonate resin (a), and the multilayered article and formed article using the film can be applied to various fields. For example, these may be suitably used as a transparent substrate material, a transparent protective material, and the like. Specific examples include using as a transparent substrate material and a transparent protective material (for example, a front plate) in portable display devices such as mobile phone terminals, portable electronic toys, mobile information terminals, and mobile PCs, or in stationary display devices such as notebook personal computers (PCs), desktop PC liquid crystal monitors, car navigation liquid crystal monitors, and liquid crystal televisions. Among these, the film and articles of the present invention may be suitably used as a touch panel front protective plate that requires a high level of design, and as a front plate for car navigation systems, OA devices, and portable electronic devices.

[Examples]

Hereinafter, the present invention will be described more specifically with reference to Examples. However, the present invention is not limited to the following Examples, and can be freely modified and implemented without departing from the gist of the present invention.

<Synthesis Example 1 (PC1)>

7.3 kg of bisphenol A (manufactured by Nippon Steel Chemical Co., Ltd.), 9.8 g of 1,1,1-tris(4-hydroxyphenyl)ethane, and 8 g of hydrosulfite were dissolved in 43 L of a 5% by mass aqueous sodium hydroxide solution. Then, while adding 28 L of methylene chloride and stirring, 146.5 g of p-tertiary butylphenol (manufactured by DIC Corporation) was added, and 3.5 kg of phosgene was blown in for 60 minutes while keeping the temperature at 20°C. After completion

of the phosgene blowing, the reaction liquid was emulsified by vigorously stirring, and after emulsification, 8 g of triethylamine was added and stirring was continued for about 1 hour to carry out polymerization. The polymer solution was separated into an aqueous phase and an organic phase, the organic phase was neutralized with phosphoric acid, then repeatedly washed with water until the pH of the washing solution became neutral. Then, 35 L of isopropanol was added to precipitate the polymer. The precipitate was filtered and then dried to obtain a white powdery polycarbonate resin having 0.1 mol% of a branched structure derived from 1,1,1-tris(4-hydroxyphenyl)ethane.

<Synthesis Example 2 (PC2)>

7.3 kg of bisphenol A (manufactured by Nippon Steel Chemical Co., Ltd.), 59.1 g of 1,1,1-tris(4-hydroxyphenyl)ethane, and 8 g of hydrosulfite were dissolved in 43 L of a 5% by mass aqueous sodium hydroxide solution. Then, while adding 28 L of methylene chloride and stirring, 146.5 g of p-tertiary butylphenol (manufactured by DIC Corporation) was added, and 3.5 kg of phosgene was blown in for 60 minutes while keeping the temperature at 20°C. After completion of the phosgene blowing, the reaction liquid was emulsified by vigorously stirring, and after emulsification, 8 g of triethylamine was added and stirring was continued for about 1 hour to carry out polymerization. The polymer solution was separated into an aqueous phase and an organic phase, the organic phase was neutralized with phosphoric acid, then repeatedly washed with water until the pH of the washing solution became neutral. Then, 35 L of isopropanol was added to precipitate the polymer. The precipitate was filtered and then dried to obtain a white powdery polycarbonate resin having 0.6 mol% of a branched structure derived from 1,1,1-tris(4-hydroxyphenyl)ethane.

<Synthesis Example 3 (PC3)>

6.000 kg of bisphenol A (manufactured by Nippon Steel Chemical Co., Ltd.) and 30 g of hydrosulfite were dissolved in 30 L of a 5% by mass aqueous sodium hydroxide solution. Then, while adding 10 L of methylene chloride and stirring, 3.0 kg of phosgene was blown in for 20 minutes while keeping the temperature at 15°C. After completion of the phosgene blowing, 243.0 g of p-tert-butylphenol (manufactured by DIC Corporation) was added, and then 10 L of aqueous sodium hydroxide solution having a concentration of 5% by mass and 12 L of methylene chloride were added. The reaction liquid was emulsified by vigorously stirring, 10 mL of triethylamine was added, and then the mixture was stirred for 1 hour while adjusting to 20°C to 25°C to carry out polymerization. After completion of the polymerization, the reaction liquid was separated into an aqueous phase and an organic phase, the organic phase was neutralized with phosphoric acid, then repeatedly washed with water until the conductivity of the cleaning solution (aqueous phase) was 10 $\mu$S/cm or less, to thereby obtain a methylene chloride resin solution of an aromatic polycarbonate resin (PC-A) having a viscosity average molecular weight of 15,800.

Next, 6.000 kg of bisphenol A (manufactured by Nippon Steel Chemical Co., Ltd.) and 50 g of hydrosulfite were dissolved in 40 L of an aqueous sodium hydroxide solution having a concentration of 5% by mass. Then, while adding 32 L of methylene chloride and stirring, 3.6 kg of phosgene was blown in for 25 minutes while keeping the temperature at 15°C. After completion of the phosgene blowing, 31.6 g of p-tert-butylphenol (manufactured by DIC Corporation) was added as a molecular weight modifier, and then 10 L of aqueous sodium hydroxide solution having a concentration of 5% by mass and 53 L of methylene chloride were added. The reaction liquid was emulsified by vigorously stirring, 30 mL of triethylamine was added, and then the mixture was stirred for 1 hour while adjusting to 20°C to 25°C to carry out polymerization. After completion of the polymerization, the reaction liquid was separated into an aqueous phase and an organic phase, the organic phase was neutralized with phosphoric acid, then repeatedly washed with water until the conductivity of the cleaning solution (aqueous phase) was 10 $\mu$S/cm or less, to thereby obtain a methylene chloride resin solution of an aromatic polycarbonate resin (PC-B) having a viscosity average molecular weight of 77,000.

67% by mass in terms of polycarbonate resin of the methylene chloride resin solution of PC-A and 33% by mass in terms of polycarbonate resin of the methylene chloride resin solution of PC-B were mixed with a static mixer in the state of the methylene chloride resin solution to obtain a mixed resin solution. This mixed resin solution was added dropwise to warm water maintained at 50°C. The solvent was removed by evaporation, and then the solid matter was pulverized to obtain a white powdery precipitate. The obtained precipitate was filtered and dried at 120°C for 24 hours to obtain an aromatic polycarbonate resin composition.

<Synthesis Example 4 (PC4)>

7 kg of a polycarbonate resin powder (manufactured by Mitsubishi Gas Chemical Company, Inc., H-4000 powder, viscosity average molecular weight 16,000) was added to 17 kg of the polycarbonate resin obtained in Synthesis Example 3, and mixed with a tumbler for 10 minutes. The mixture was extruded at 320°C using a twin-screw extruder with a vent of 26 mm $\varphi$ and L/D = 40 to obtain an aromatic polycarbonate resin composition.

PC5: manufactured by Mitsubishi Engineering-Plastics Corporation, Iupilon, E-2000N
PC6: manufactured by Mitsubishi Engineering-Plastics Corporation, Iupilon, S-2000N
PC7: manufactured by Mitsubishi Engineering-Plastics Corporation, Novarex, M-7025U

<Q value measurement method>

The Q value (flow value) was measured by the method described in JIS K7210-1: 2014 Annex JA. Using a flow tester and a die with a hole diameter of 1.0 mm and a length of 10 mm, the amount of molten resin discharged under the conditions of a test temperature of 280°C, a test force of 160 kg/$cm^2$, and a residual heat time of 420 seconds was taken as the flow value ($\times$ 0.01 $cm^3$/sec).
As the flow tester, the flow tester CFD500D manufactured by Shimadzu Corporation was used.

<Viscosity average molecular weight measurement method>

For the viscosity average molecular weight [Mv], methylene chloride was used as the solvent, and the intrinsic viscosity [η] (unit: dL/g) at a temperature of 20°C was determined using an Ubbelohde viscometer. That is, the viscosity average molecular weight [Mv] was calculated from the Schnell viscosity equation, that is, $\eta = 1.23 \times 10^{-4} Mv^{0.83}$. The intrinsic viscosity [η] was calculated by measuring the specific viscosity [ηsp] at each solution concentration [C] (g/dL) by the following expression.

[Expression 4]

$$\eta = \lim_{c \to 0} \eta_{sp} / c$$

Examples 1 to 4 and Comparative Examples 1 to 3

<Production of film>

Using a single-layer extruder equipped with an extruder and a T-die, each polycarbonate resin obtained in the above-described synthesis examples was extruded from the extruder and wound onto a 120°C cooling roll at 300°C to obtain a film (formed article) having a thickness of 400 μm and a width of 30 cm.

<Viscosity measurement method (calculation of the value of ((log Y - log X) / 2))>

Using the polycarbonate resins obtained in the above-described synthesis examples, the viscosity X [Pa·s] at a shear rate of 6.080 $\times$ 10 [1/s] measured at 300°C and the viscosity Y [Pa·s] at a shear rate of 6.080 $\times$ $10^3$ [l/s] measured at 300°C were measured according to the following method.
The measurement was carried out using a capillary type rheometer with a capillary having a diameter of 1.0 mm, a length of 10.0 mm, and an L/D of 10 at a furnace body temperature of 300°C.
The used capillary type rheometer was manufactured by Toyo Seiki Seisaku-sho, Ltd.
Based on the obtained viscosities X and Y, (log Y - log X) / 2 was calculated.
The viscosity of the acrylic resin, which will be described later, was also measured according to the same method.

<Film heating test>

The obtained film was introduced into a compressed air forming machine (manufactured by NK Enterprise), and the four sides (230 mm $\times$ 170 mm area) of the film were fixed with a gripping tool and arranged as illustrated in Figure 4. Next, the film was heated by an infrared heater in a heating space in the apparatus. The heating time was 1 minute 30 seconds. The set temperature of the heater was 365°C. The drawdown amount (see Figure 4) was measured three times for each resin according to the following procedure, and the average value thereof is shown in Table 1. In addition, the drawdown resistance evaluation was performed by classifying as follows.

A: Drawdown amount of less than 10 mm.
B: Drawdown amount of 10 mm or more and less than 30 mm.
C: Drawdown amount of 30 mm or more.

<Drawdown amount measurement method>

The height of the center portion where the film hung down was measured from the gripping surface of the above-described film and taken as the drawdown amount.

<Evaluation of formability (thermoformability)>

The obtained film was introduced into the above-described compressed air forming machine and fixed. Next, the film temperature was heated to 180°C in the heating space, 2.5 MPa compressed air was applied on the film in the molding space, and the film was pressed against the lower mold 5 as illustrated in Figure 4. The lower mold 5 was provided with a square convex portion, and forming was carried out by closely contacting the film against the convex portion. A cube mold having a height of 7 mm was used. The edge of the lower mold convex portion was at a right angle (radius of curvature less than 1 mm) in cross section. The obtained formed article had a radius of curvature R as illustrated in Figure 5.

The radius of curvature of the inner surface (bottom surface of the formed article) of the bent portion of the compressed air-formed film (radius of curvature of the R portion illustrated in Figure 5) was measured. The radius of curvature of each resin was measured three times in accordance with the following procedure, and the average value thereof is shown in Table 1. Further, the evaluation of the thermoformability was performed by classifying as follows.

A: Radius of curvature of bent portion was 1.60 mm or less.
B: Radius of curvature of bent portion was more than 1.60 mm and 2.50 mm or less.
C: Radius of curvature of bent portion was more than 2.50 mm.

<Radius of curvature measurement method>

The radius of curvature of the inner surface of the bent portion (bottom surface of the formed article) of the film produced in the above <Evaluation of formability> was measured using a contact type contour shape measuring machine CONTOURERECORD 2700/503 (manufactured by Tokyo Seimitsu Co., Ltd.).

[Table 1]

| | Example 1 | Example 2 | Example 3 | Example 4 | Comparative Example 1 | Comparative Example 2 | Comparative Example 3 |
|---|---|---|---|---|---|---|---|
| Polycarbonate resin | PC1 | PC2 | PC3 | PC4 | PC5 | PC6 | PC7 |
| Q value | 2.6 | 1.5 | 1.9 | 6 | 3.1 | 7 | 12 |
| Viscosity average molecular weight (Mv) | 28,000 | 28,300 | 36,900 | 29,500 | 27,500 | 23,500 | |
| Branching agent ratio [mol%] | 0.1 | 0.6 | 0 | 0 | 0 | 0 | |
| (logY-loqx)/2 | -0.44 | -0.55 | -0.57 | -0.48 | -0.4 | -0.3 | -0.39 |
| Drawdown amount [mm] | 22.8 | 0 | 8.7 | 19.8 | 31 | 33.7 | 35.2 |
| Drawdown resistance evaluation | B | A | A | B | C | C | C |
| Bottom surface R [mm] | 2.15 | 2.01 | 1.74 | 1.53 | 2.14 | 1.55 | 1.38 |
| Thermoformability evaluation | B | B | B | A | B | A | A |

- Q value unit: × 0.01 $cm^3$/sec
- Branching agent ratio: Ratio (percentage) obtained by dividing the number of moles of the branching agent used during synthesis by the total number of moles of the number of moles of the monomer and the number of moles of the branching agent

Example 5

<Multilayered article production 1>

Using a multi-layer extruder equipped with two extruders, a feed block, and a T-die, the polycarbonate resin (PC1) described in Example 1 and acrylic resin (manufacturer: manufactured by ARKEMA, product number: ALTUGLAS V020) were co-extruded from, respectively, a single-screw extruder with a vent of 75 mm φ and L/D = 32 at 300°C and a single-screw extruder with a vent of 40 mm φ and L/D = 32 at 260°C onto a 120°C cooling roll and wound. The obtained multilayered article had a two-type two-layer structure of polycarbonate resin / acrylic resin. The thickness of each layer was 240/60 (μm).

Example 6 and Comparative Example 4

<Multilayered article production 2>

The PC4 and PC6 polycarbonate resins were respectively used to produce the following multilayered articles.
Using a multi-layer extruder equipped with two extruders, a feed block, and a T-die, the polycarbonate resins (any of the known PC, PC4, or PC6) described in each Examples or Comparative Examples and acrylic resin (manufacturer: manufactured by ARKEMA, product number: ALTUGLAS V020) were co-extruded from, respectively, a single-screw extruder with a vent of 100 mm φ and L/D = 32 at 300°C and a single-screw extruder with a vent of 50 mm φ and L/D = 32 at 260°C onto a 120°C cooling roll and wound. The obtained multilayered article had a two-type two-layer structure of polycarbonate resin / acrylic resin. The thickness of each layer was 240/60 (μm).
From the viscosity $X^2$ [Pa·s] at a shear rate of 6.080 × 10 [1/s] measured at 240°C and the viscosity $X^3$ [Pa·s] at a shear rate of 1.216 × $10^2$ [l/s] measured at 240°C, the $n^b$ and the $C^b$ of the acrylic resin were calculated based on expression (X3) and expression (X4) to be -6.3 × $10^{-1}$ and 3.3 × $10^4$, respectively.
A length of 1400 mm was cut from the obtained multilayered article, and the average film thickness was measured every 100 mm for the central portion in the longitudinal direction of the section 10 mm from the edge in the longitudinal direction to 10 mm from the edge on the opposite side (1200 mm). The standard deviation of the film thickness and the difference between maximum and minimum were measured. The results are shown in the table below.

[Table 2]

| | Example 6 | Comparative Example 4 |
|---|---|---|
| Polycarbonate resin | PC4 | PC6 |
| Average thickness [μm] | 55.2 | 55.5 |
| Standard deviation | 1.5 | 6 |
| Difference between maximum and minimum | 4.2 | 18.4 |
| na | -4.2.E-01 | -7.9.E-02 |
| $C^a$ | 7.3.E+03 | 7.6.E+02 |
| $C^a$-$C^b$ | 2.6.E+03 | 3.2.E+04 |
| na-nb | 2.1.E-01 | 5.5.E-01 |

$C^a$ and na were calculated by substituting the viscosity X [Pa·s] at a shear rate of 6.080 × 10 [1/s] measured at 300°C and the viscosity $X^1$ [Pa·s] at a shear rate of 1.216 × $10^2$ [l/s] measured at 300°C into expression (X1) and expression (X2).

[Reference Signs List]

| | |
|---|---|
| 1 | film containing polycarbonate resin (a) |
| 11 | bent portion |
| 1a | film |
| 1x | drawdown film |
| 12 | layer composed of lining resin |
| 2 | layer containing thermoplastic resin (b) |
| 2a | layer containing formed thermoplastic resin (b) |
| 3 | infrared heater |
| 4 | gripping tool |
| 5 | lower mold (mold for compressed air forming) |
| 6 | formed article |
| 10, 30 | in-mold formed article (multilayered article) |
| 20 | multilayered article |
| R1 | radius of curvature of bent portion |
| R | radius of curvature of formed article |

**Claims**

**1.** A film comprising a polycarbonate resin (a), wherein the polycarbonate resin (a) has a viscosity of X [Pa·s] at a shear rate of 6.080 × 10 [1/s] measured at 300°C and a viscosity of Y [Pa·s] at a shear rate of 6.080 × $10^3$ [l/s] measured at 300°C, the following expression (i) is satisfied.
[Expression 1]

$$-0.69 < \frac{\log Y - \log X}{2} < -0.41 \quad \cdots (i)$$

**2.** The film according to claim 1, wherein the polycarbonate resin has a viscosity average molecular weight of 1.0 × $10^4$ to 5.0 × $10^4$.

**3.** The film according to claim 1 or 2, wherein the polycarbonate resin (a) is a polycarbonate resin including 70 to 100 mol% of a constituent unit represented by formula (1) with respect to all the constituent units of the polycarbonate resin (a),

[Formula 1]

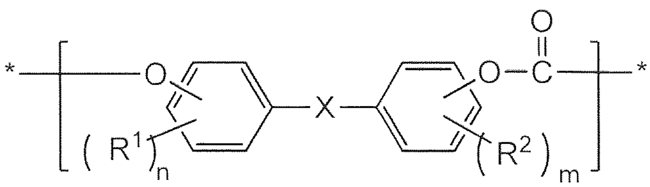

(1)

wherein $R^1$ and $R^2$ each independently represent an alkyl group or an aryl group; X represents a single bond or a group represented by any of the following formulas (2) to (4); n and m are each independently an integer from 0 to 4; and * represents a bond.

[Formula 2]

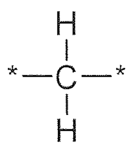

(2)

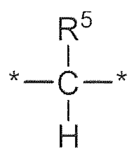

(3)

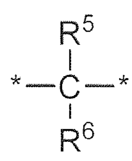

(4)

wherein $R^5$ and $R^6$ are each independently an alkyl group or an aryl group; and * is a bond.

4. The film according to any one of claims 1 to 3, wherein the polycarbonate resin (a) includes two or more types of polycarbonate resins having different viscosity average molecular weights.

5. The film according to any one of claims 1 to 4, wherein the polycarbonate resin (a) has a flow value (Q value) of 1.0 or more and 6.5 or less.

6. The film according to any one of claims 1 to 5, wherein the polycarbonate resin (a) has a branched structure represented by formula (A),

[Formula 3]

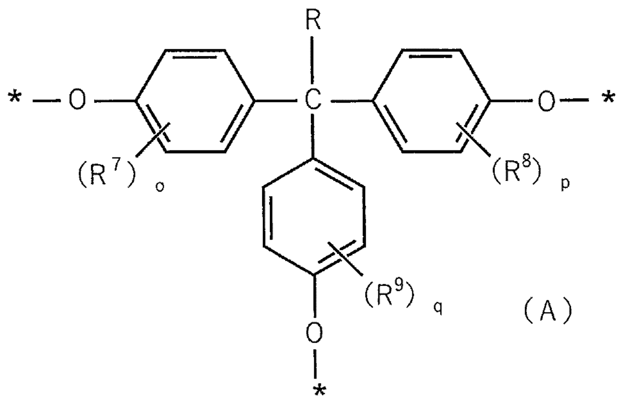

(A)

wherein R is hydrogen or an alkyl group having 1 to 5 carbon atoms; $R^7$, $R^8$, and $R^9$ each independently represent an alkyl group or an aryl group; o, p, and q are each independently an integer from 0 to 4; and * represents a bond.

7. The film according to any one of claims 1 to 6, wherein a total thickness thereof is 0.1 to 3.0 mm.

8. A multilayered article having a layer comprising a thermoplastic resin (b) on at least one surface of the film according to any one of claims 1 to 6.

9. The multilayered article according to claim 8, wherein when the polycarbonate resin (a) has a viscosity of X [Pa·s] at a shear rate of $6.080 \times 10$ [1/s] measured at 300°C and a viscosity of $X^1$ [Pa·s] at a shear rate of $1.216 \times 10^2$ [l/s] measured at 300°C, and the thermoplastic resin (b) has a viscosity of $X^2$ at a shear rate of $6.080 \times 10$ [1/s] measured at 240°C and a viscosity of $X^3$ at a shear rate of $1.216 \times 10^2$ [l/s] measured at 240°C, the following expressions (X1) to (X6) are satisfied.

$X = C^a \times (6.080 \times 10)^{na}$ (X1)
$X^1 = C^a \times (1.216 \times 10^2)^{na}$ (X2)
$X^3 = C^b \times (6.080 \times 10)^{nb}$ (X3)
$X^4 = C^b \times (1.216 \times 10^2)^{nb}$ (X4)
$0 < |C^a - C^b| < 3.2 \times 10^4$ (X5)
$0 < |na - nb| < 3.8 \times 10^{-1}$ (X6)

10. The multilayered article according to claim 8 or 9, wherein the thermoplastic resin (b) comprises at least one resin selected from an acrylic resin, the polycarbonate resin (a), and a polycarbonate resin other than the polycarbonate resin (a).

11. The multilayered article according to claim 8 or 9, wherein the thermoplastic resin (b) comprises an acrylic resin.

12. The multilayered article according to any one of claims 8 to 11, wherein a thickness of the layer containing the thermoplastic resin (b) is 10 to 100 μm.

13. A multilayered article having a hard coat layer on at least one surface of the film according to any one of claims 1 to 7.

**14.** The multilayered article according to any one of claims 8 to 12, further comprising a hard coat layer on at least one surface of the surface of the film containing the polycarbonate resin (a) or the surface of the layer containing the thermoplastic resin (b).

**15.** The multilayered article according to any one of claims 8 to 12 and 14, wherein the total thickness is 0.1 to 3.0 mm.

**16.** The multilayered article according to any one of claims 8 to 12, 14 and 15, wherein the total thickness excluding the hard coat layer is 0.1 to 3.0 mm.

**17.** The multilayered article according to any one of claims 8 to 12 and 14 to 16, wherein a ratio (T1 : T2) of a thickness (T1) of the film containing the polycarbonate resin (a) to a thickness (T2) of the layer containing the thermoplastic resin (b) is 1 : 1 to 50 : 1.

**18.** The multilayered article according to any one of claims 8 to 17, comprising a print layer on at least one surface thereof.

**19.** A thermoformed article comprising the film according to any one of claims 1 to 7 or the multilayered article according to any one of claims 8 to 18.

**20.** An in-mold formed article comprising the film according to any one of claims 1 to 7 or the multilayered article according to any one of claims 8 to 18.

**21.** A method for producing a formed article, which comprises thermoforming the film according to any one of claims 1 to 7 or the multilayered article according to any one of claims 8 to 18.

**22.** A method for producing an in-mold formed article, comprising:

(I) thermoforming the film according to any one of claims 1 to 7 or the multilayered article according to any one of claims 8 to 18;
(II) inserting the thermoformed film or multilayered article into a mold for injection-molding; and
(III) lining a resin for injection-molding on the thermoformed film or multilayered article.

Fig. 1

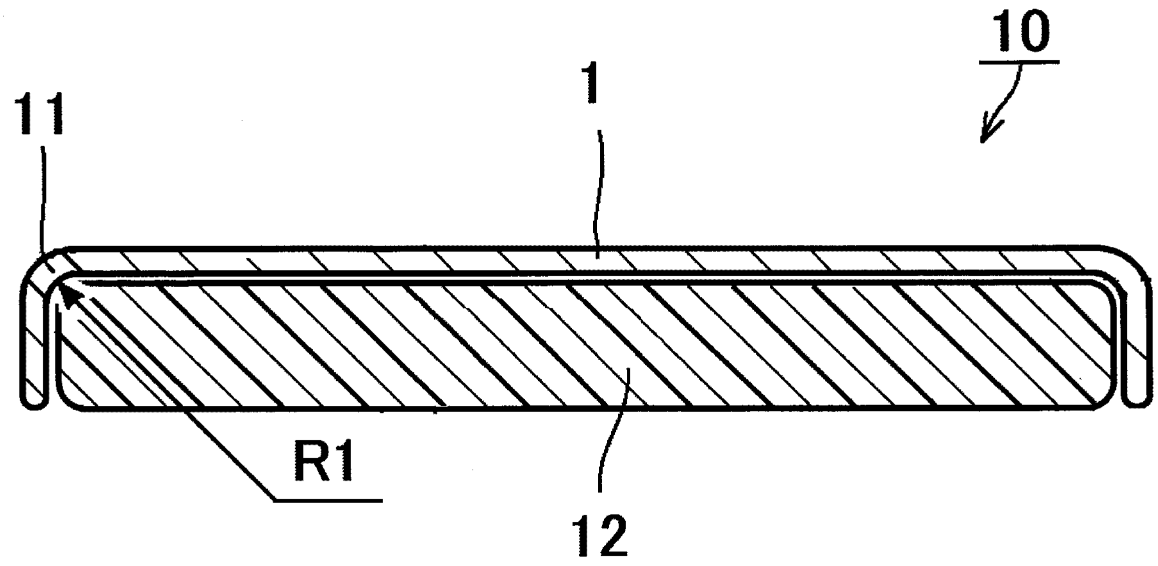


Fig. 2

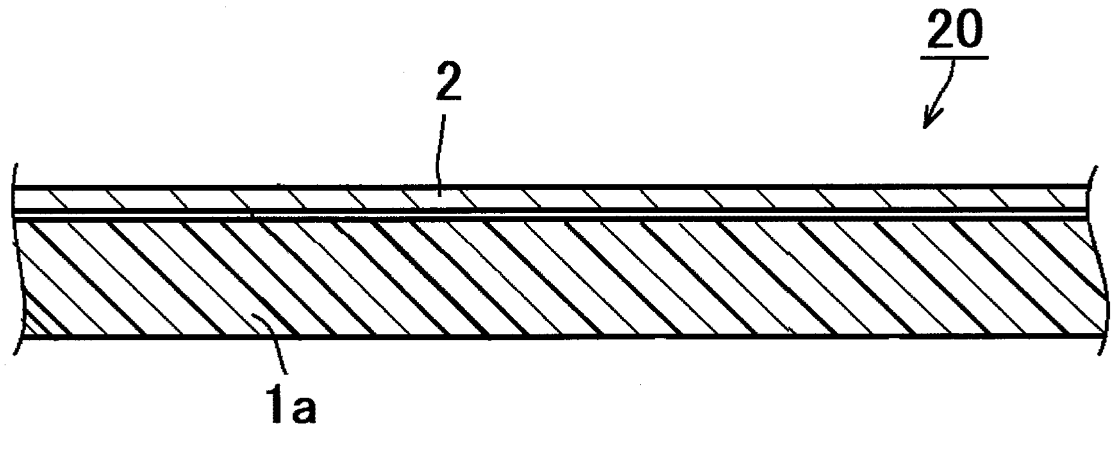

Fig. 3

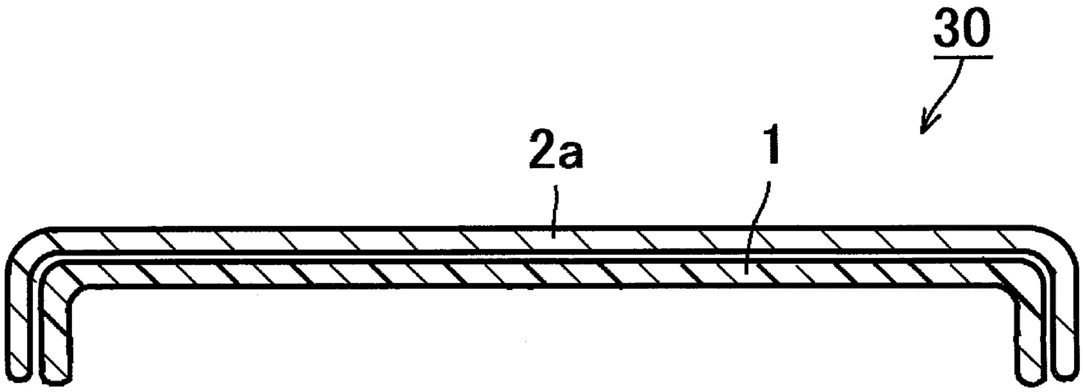


Fig. 4

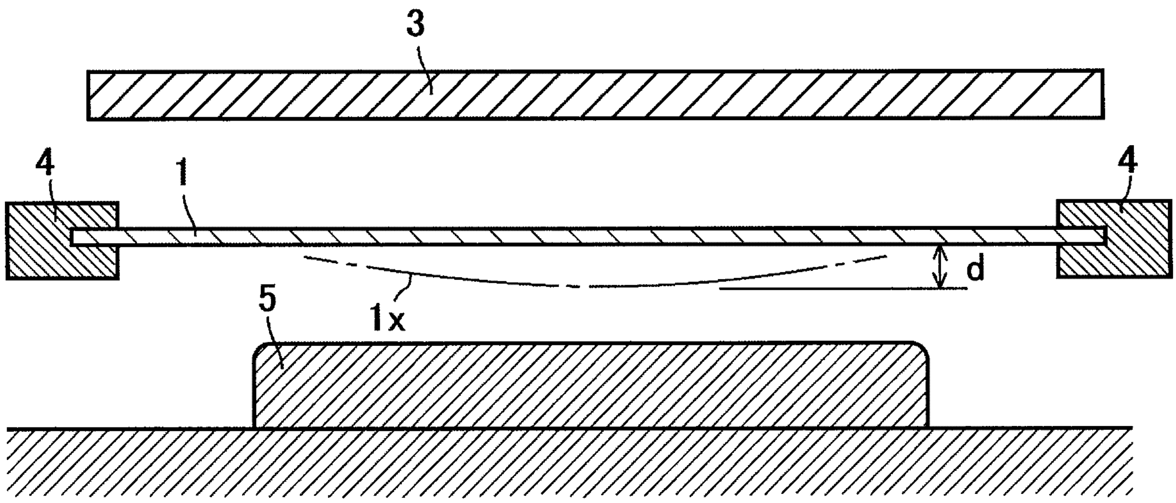


Fig. 5

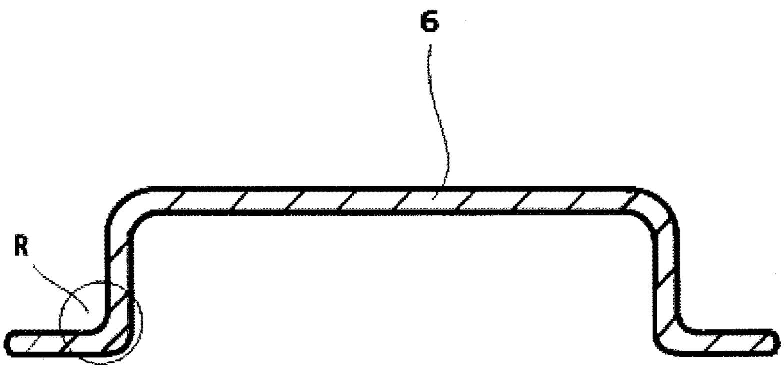

## INTERNATIONAL SEARCH REPORT

International application No.
PCT/JP2020/015453

A. CLASSIFICATION OF SUBJECT MATTER
Int. Cl. C08J5/18(2006.01)i, B29C45/14(2006.01)i, B32B27/30(2006.01)i, B32B27/36(2006.01)i, C08G64/00(2006.01)i, C08J7/04(2020.01)i
FI: C08J5/18 CFD, B29C45/14, B32B27/30 A, B32B27/36 102, C08G64/00, C08J7/04 B
According to International Patent Classification (IPC) or to both national classification and IPC

B. FIELDS SEARCHED
Minimum documentation searched (classification system followed by classification symbols)
Int. Cl. C08J5/18, B29C45/14, B32B27/30, B32B27/36, C08C64/00, C08J7/04

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2004-523634 A (BAYER AG) 05 August 2004, paragraphs [0014], [0087], examples C3-C5, table 3 | 1-22 |
| A | JP 6-148426 A (IDEMITSU PETROCHEMICAL CO., LTD.) 27 May 1994, claim 1, example 1 | 1-22 |
| A | JP 2016-79276 A (MITSUBISHI GAS CHEMICAL CO., INC.) 16 May 2016, paragraph [0067] | 1-22 |
| A | JP 8-53556 A (TEIJIN CHEMICALS LTD.) 27 February 1996, claim 1, abstract | 1-22 |
| A | JP 6-297557 A (TORAY INDUSTRIES, INC.) 25 October 1994, claim 1 | 1-22 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09.06.2020 | 23.06.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/015453

| Patent Documents referred to in the Report | Publication Date | Patent Family | Publication Date |
|---|---|---|---|
| JP 2004-523634 A | 05.08.2004 | US 2003/0013839 A1<br>paragraphs [0038], [0039], [0124], examples C3-C5, Table 3<br>WO 2002/077065 A1<br>EP 1377625 A1<br>DE 10122493 A<br>AT 329953 T<br>HK 1069840 A<br>CN 1531567 A<br>ES 2266545 T<br>KR 10-0816129 B1<br>TW 1304075 B | |
| JP 6-148426 A | 27.05.1994 | US 5470937 A<br>claims, example 1<br>WO 1993/017358 A1<br>EP 596129 A1<br>DE 69315037 T | |
| JP 2016-79276 A | 16.05.2016 | (Family: none) | |
| JP 8-53556 A | 27.02.1996 | (Family: none) | |
| JP 6-297557 A | 25.10.1994 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012051997 A
- JP 2018103518 A
- JP 2017031313 A
- WO 2015190162 A
- WO 2015159813 A
- JP 2015104910 A
- JP 2011219667 A